# EUROPEAN PATENT APPLICATION

(11) **EP 4 451 795 A1**
(43) Date of publication of application: **23.10.2024**
(21) Application number: 23743326.3
(22) Date of filing: 19.01.2023
(51) Int. Cl.: H04W 88/04, H04W 36/28, H04W 36/36, H04W 40/36, H04W 76/15

(54) **COMMUNICATION CONTROL METHOD**

(30) Priority: 21.01.2022 US 202263301786 P
(71) Applicant: KYOCERA CORPORATION, Kyoto-shi, Kyoto 612-8501 (JP)
(72) Inventor: FUJISHIRO, Masato, Kyoto-shi, Kyoto 612-8501 (JP); CHANG, Henry, San Diego, California 92123 (US)
(74) Representative: Viering, Jentschura & Partner mbB Patent- und Rechtsanwälte
(86) International application number: PCT/JP2023/001570
(87) International publication number: WO 2023/140334

(57) **Abstract**

In an aspect, a communication control method is a communication control method in a mobile communication system configured to perform a first communication on a predetermined link between a first remote user equipment and a predetermined equipment, and a second communication on an indirect link between the first remote user equipment and the predetermined equipment via a second relay user equipment. The communication control method includes detecting, by the first remote user equipment, an abnormality of the indirect link. The communication control method includes transmitting, by the first remote user equipment, an abnormality notification message including information indicating the abnormality to the predetermined equipment via the predetermined link.

## Description

### TECHNICAL FIELD

The present disclosure relates to a communication control method used in a mobile communication system.

### BACKGROUND

For a mobile communication system based on the 3rd Generation Partnership Project (3GPP) standard, a technology of sidelink relay using a user equipment as a relay node has been under study (e.g., see "3GPP TS 38.300 V16.8.0 (2021-12)"). The sidelink relay is a technology in which a relay node referred to as a relay user equipment (Relay UE) mediates communication between a base station and a remote user equipment (Remote UE) and relays the communication.

### SUMMARY

In a first aspect, a communication control method is a communication control method in a mobile communication system configured to perform a first communication on a predetermined link between a first remote user equipment and a predetermined equipment, and a second communication on an indirect link between the first remote user equipment and the predetermined equipment via a second relay user equipment. The communication control method includes detecting, by the first remote user equipment, an abnormality of the indirect link. The communication control method includes transmitting, by the first remote user equipment, an abnormality notification message including information indicating the abnormality to the predetermined equipment via the predetermined link.

In a second aspect, a communication control method is a communication control method in a mobile communication system configured to perform a first communication on a predetermined link between a first remote user equipment and a base station, and a second communication on an indirect link between the first remote user equipment and the base station via a second relay user equipment. The communication control method includes performing either transmitting, by the second relay user equipment having performed handover to another base station, a first handover notification message to the first remote user equipment via the indirect link, the first handover notification message including information indicating the handover, or transmitting, by the first remote user equipment having performed handover to the other base station, a second handover notification message to the second relay user equipment via the indirect link, the second handover notification message including information indicating the handover.

In a third aspect, a communication control method is a communication control method in a mobile communication system configured to perform a first communication on a predetermined link between a first remote user equipment and a predetermined equipment, and a second communication on an indirect link between the first remote user equipment and the predetermined equipment via a second relay user equipment. The communication control method includes performing, by the first remote user equipment, relay reselection processing. The communication control method includes transmitting, by the first remote user equipment, a relay reselection notification message to the predetermined equipment via the predetermined link, the relay reselection notification message including identification information of a third relay user equipment selected in the relay reselection processing.

In a fourth aspect, a communication control method is a communication control method in a mobile communication system configured to perform a first communication on a predetermined link between a first remote user equipment and a predetermined equipment, and a second communication on an indirect link between the first remote user equipment and the predetermined equipment via a second relay user equipment. The communication control method includes detecting, by the first remote user equipment, a radio link failure on the indirect link. The communication control method includes performing, by the first remote user equipment, no relay reselection when a radio quality of the predetermined link is equal to or more than a threshold.

### BRIEF DESCRIPTION OF THE DRAWINGS

FIG. 1 is a diagram illustrating a configuration example of a mobile communication system according to a first embodiment.
FIG. 2 is a diagram illustrating a configuration example of a UE according to the first embodiment.
FIG. 3 is a diagram illustrating a configuration example of a gNB according to the first embodiment.
FIG. 4 is a diagram illustrating a configuration example of a protocol stack of a user plane according to the first embodiment.
FIG. 5 is a diagram illustrating a configuration example of a protocol stack of a control plane according to the first embodiment.
FIG. 6 is a diagram illustrating an assumed scenario according to the first embodiment.
FIG. 7 is a diagram illustrating a configuration example of a protocol stack of a user plane in the assumed scenario according to the first embodiment.
FIG. 8 is a diagram illustrating a configuration example of a protocol stack of a control plane in the assumed scenario according to the first embodiment.
FIG. 9 is a diagram illustrating a configuration example of a mobile communication system according to the first embodiment.
FIG. 10 is a diagram illustrating a configuration example of the mobile communication system according to the first embodiment.
FIG. 11 is a diagram illustrating a configuration example of the mobile communication system according to the first embodiment.
FIG. 12 is a diagram illustrating a configuration example of the mobile communication system according to the first embodiment.
FIG. 13 is a diagram illustrating a configuration example of the mobile communication system according to the first embodiment.
FIG. 14 is a diagram illustrating an operation example according to the first embodiment.
FIG. 15 is a diagram illustrating an operation example according to a second embodiment.
FIG. 16 is a diagram illustrating an operation example according to a third embodiment.
FIG. 17 is a diagram illustrating an operation example according to the fourth embodiment.

### DESCRIPTION OF EMBODIMENTS

A mobile communication system according to an embodiment is described with reference to the drawings. In the description of the drawings, the same or similar parts are denoted by the same or similar reference signs.

Configuration Example of Mobile Communication System In an embodiment, a configuration example of a mobile communication system is described. In the embodiment, a mobile communication system 1 is a 3GPP 5G system. Specifically, a radio access scheme in the mobile communication system 1 is New Radio (NR) being a radio access scheme of the 5G. Note that Long Term Evolution (LTE) may be at least partially applied to the mobile communication system 1. Future mobile communication systems such as the 6G may be applied to the mobile communication system 1.

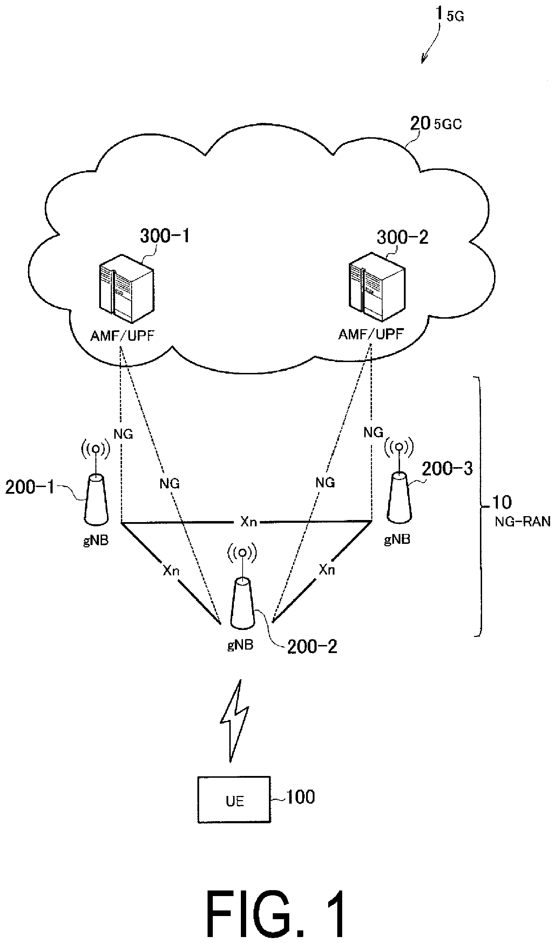

FIG. 1 is a diagram illustrating a configuration example of the mobile communication system 1 according to an embodiment.

As illustrated in FIG. 1, the mobile communication system 1 includes a User Equipment (UE) 100, a 5G radio access network (Next Generation Radio Access Network (NG-RAN)) 10, and a 5G Core Network (5GC) 20.

The UE 100 is a mobile wireless communication apparatus. The UE 100 may be any apparatus as long as the UE 100 is used by a user. Examples of the UE 100 include a mobile phone terminal (including a smartphone) or a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The NG-RAN 10 includes base stations (referred to as "gNBs" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency. Note that, hereinafter, the "cell" and the base station may be used without distinction.

Note that the gNB 200 can be connected to an Evolved Packet Core (EPC) corresponding to a core network of LTE. An LTE base station can also be connected to the 5GC 20. The LTE base station and the gNB 200 can be connected to each other via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF 300 are connected to the gNB 200 via an NG interface which is an interface between the base station and the core network.

### Configuration of User Equipment

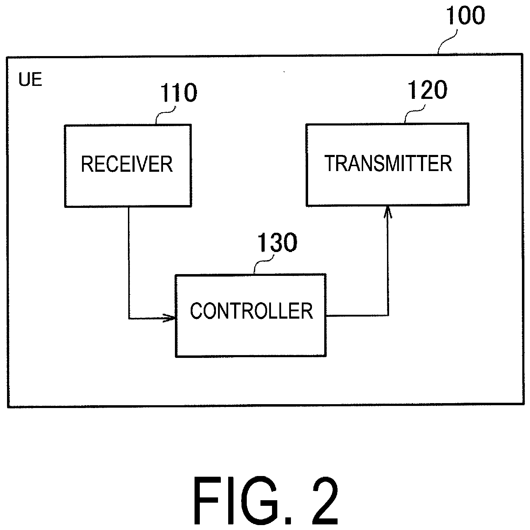

In the embodiment, a configuration example of the UE 100 that is a user equipment is described. FIG. 2 is a diagram illustrating the configuration example of the UE 100.

As illustrated in FIG. 2, the UE 100 includes a receiver 110, a transmitter 120, and a controller 130.

The receiver 110 performs various types of reception under control of the controller 130. The receiver 110 includes an antenna and converts (down-converts) a radio signal received by the antenna into a baseband signal (reception signal) which is then output to the controller 130.

The transmitter 120 performs various types of transmission under control of the controller 130. The transmitter 120 includes an antenna and converts (up-converts) the baseband signal (transmission signal) output by the controller 130 into a radio signal which is then transmitted from the antenna.

The controller 130 performs various types of control in the UE 100. The controller 130 includes at least one memory and at least one processor electrically connected to the memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing. Note that the controller 130 may perform respective processing operations and/or respective operations in the UE 100 in each embodiment described below.

### Configuration Example of Base Station

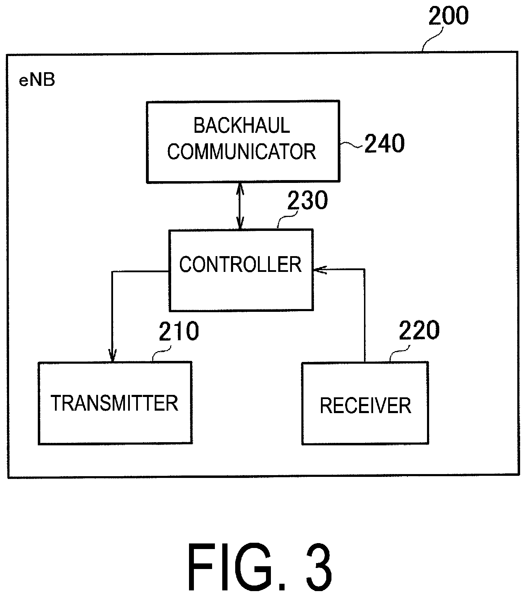

In the embodiment, a configuration example of the gNB 200 that is a base station is described. FIG. 3 is a diagram illustrating a configuration example of the gNB 200.

As illustrated in FIG. 3, the gNB 200 includes a transmitter 210, a receiver 220, a controller 230, and a backhaul communicator 240.

The transmitter 210 performs various types of transmission under control of the controller 230. The transmitter 210 includes an antenna and converts (up-converts) a baseband signal (transmission signal) output by the controller 230 into a radio signal which is then transmitted from the antenna.

The receiver 220 performs various types of reception under control of the controller 230. The receiver 220 includes an antenna and converts (down-converts) a radio signal received by the antenna into a baseband signal (reception signal) which is then output to the controller 230.

The controller 230 performs various types of controls for the gNB 200. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing. Note that, the controller 230 may perform respective processing operations and/or respective operations in the gNB 200 in each embodiment described below.

The backhaul communicator 240 is connected to a neighboring base station via the Xn interface. The backhaul communicator 240 is connected to the AMF and UPF 300 via the NG interface. Note that the gNB 200 may include a Central Unit (CU) and a Distributed Unit (DU) (i.e., functions are divided), and both units may be connected via an F1 interface.

### Configuration Example of Protocol Stack

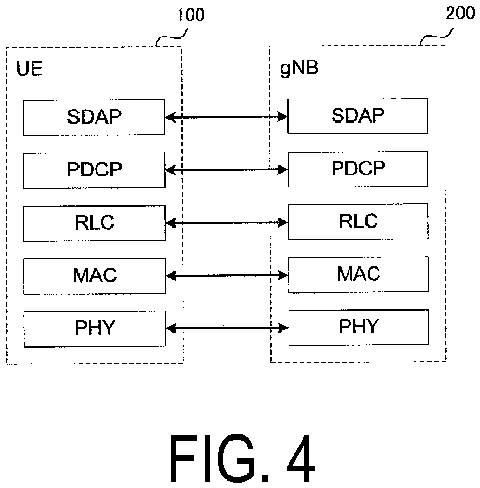

FIG. 4 is a diagram illustrating a configuration example of a protocol stack of a radio interface of a user plane handling data.

As illustrated in FIG. 4, a radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer. Note that, in the following, a layer and an entity may be used without distinction.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler determines transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression and decompression, and encryption and decryption.

The SDAP layer performs mapping between an IP flow as the unit of Quality of Service (QoS) control performed by a core network and a radio bearer as the unit of QoS control performed by an AS (access stratum). Note that, when the RAN is connected to the EPC, the SDAP need not be provided.

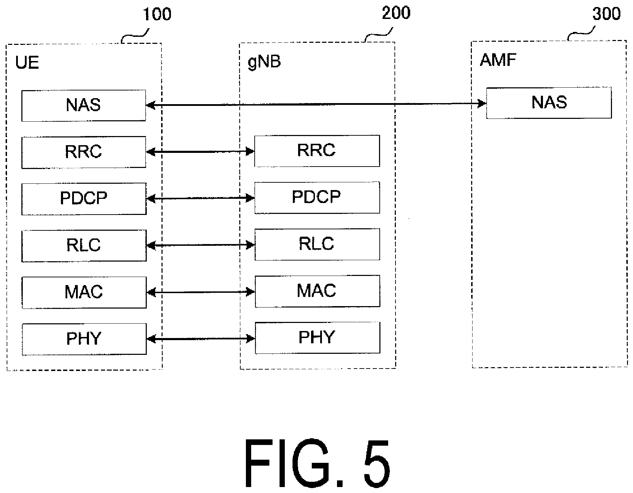

FIG. 5 is a diagram illustrating a configuration of a protocol stack of a radio interface of a control plane handling signaling (a control signal).

As illustrated in FIG. 5, the protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When a connection (RRC connection) between the RRC of the UE 100 and the RRC of the gNB 200 exists, the UE 100 is in an RRC connected state. When no connection (RRC connection) between the RRC of the UE 100 and the RRC of the gNB 200 exists, the UE 100 is in an RRC idle state. When the RRC connection is suspended, the UE 100 is in an RRC inactive state.

The NAS layer which is positioned upper than the RRC layer performs session management, mobility management, and the like. NAS signaling is transmitted between the NAS layer of the UE 100 and the NAS layer of the AMF 300.

Note that the UE 100 includes an application layer other than the protocol of the radio interface.

### First Embodiment

A first embodiment is described.

### Assumed Scenario

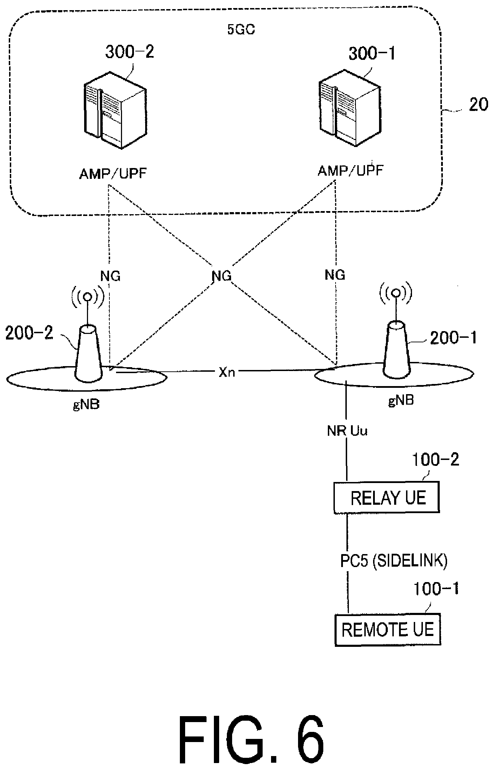

According to the first embodiment, an assumed scenario for the mobile communication system 1 is described. FIG. 6 is a diagram illustrating the assumed scenario.

As illustrated in FIG. 6, a scenario is assumed that uses sidelink relay in which a relay UE 100-2 mediates a communication between the gNB 200-1 and a remote UE 100-1 and relays the communication. In other words, in the scenario, the gNB 200-1 and the remote UE 100-1 communicate via the relay UE 100-2.

The remote UE 100-1 performs wireless communication (sidelink communication) with the relay UE 100-2 on a PC5 interface (sidelink) used as an inter-UE interface. The relay UE 100-2 performs wireless communication (Uu communication) with the gNB 200-1 on an NR Uu interface. As a result, the remote UE 100-1 indirectly communicates with the gNB 200-1 via the relay UE 100-2. The Uu communication includes uplink communication and downlink communication.

### Configuration Example of Protocol Stack in Assumed Scenario

A configuration example of a protocol stack in the assumed scenario is described.

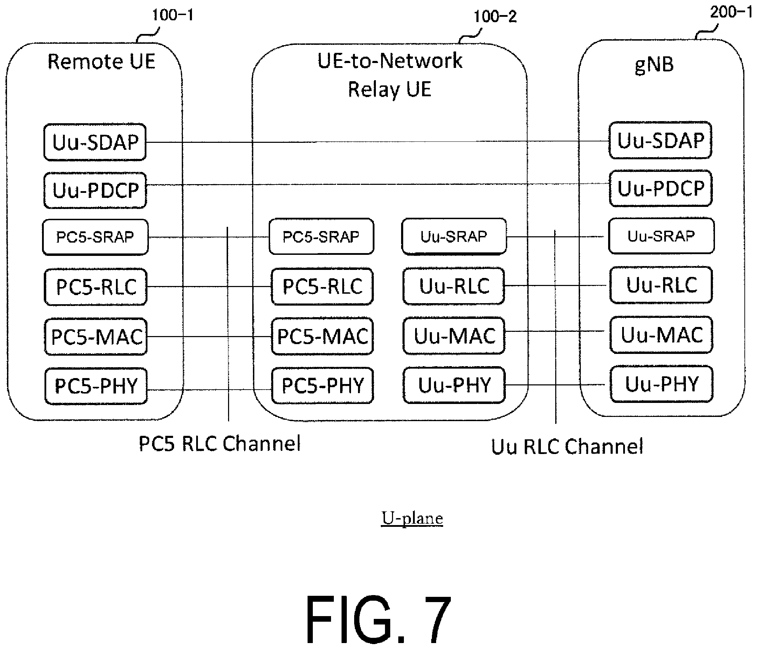

FIG. 7 is a diagram illustrating an example of a protocol stack of a user plane in the assumed scenario. FIG. 7 is also an example of a protocol stack of a user plane in relay via the relay UE 100-2 (i.e., U2N (UE to Network) relay).

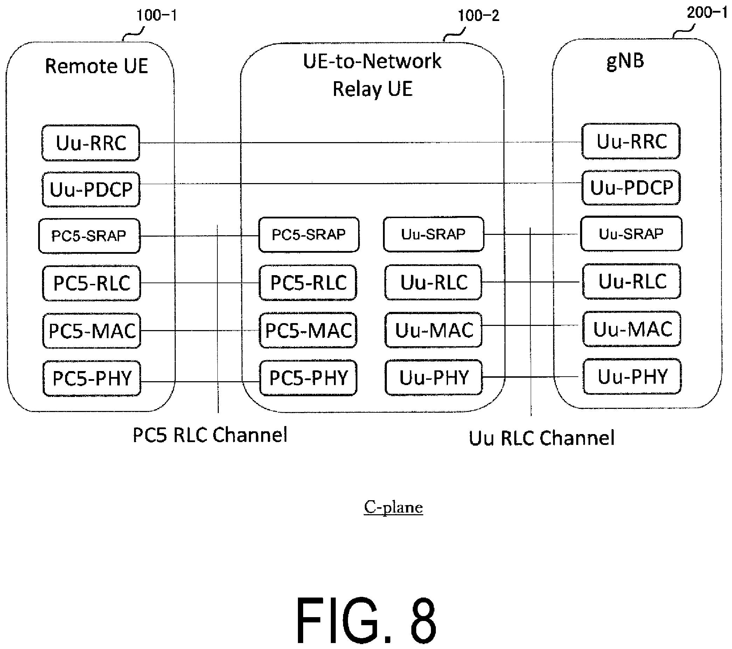

FIG. 8 is a diagram illustrating an example of a protocol stack of a control plane in the assumed scenario. FIG. 8 is also an example of a protocol stack of a control plane in the U2N relay.

As illustrated in FIG. 7, the gNB 200-1 includes a Uu-SRAP (sidelink relay adaptation protocol) layer, a Uu-RLC layer, a Uu-MAC layer, and a Uu-PHY layer which are used for communication on the NR Uu interface (Uu communication).

The relay UE 100-2 includes a Uu-SRAP layer, a Uu-RLC layer, a Uu-MAC layer, and a Uu-PHY layer which are used for communication on the NR Uu interface (Uu communication). The relay UE 100-2 includes a PC5-SRAP layer, a PC5-RLC layer, a PC5-MAC layer (PC5), and a PC5-PHY layer which are used for communication on the PC5 interface (PC5 communication).

The remote UE 100-1 includes a Uu-SDAP layer and a Uu-PDCP layer which are used for communication on a Uu interface (Uu). The remote UE 100-1 includes a PC5-SRAP layer, a PC5-RLC layer, a PC5-MAC layer (PC5), and a PC5-PHY layer which are used for communication on the PC5 interface (PC5 communication).

As illustrated in FIG. 8, in the control plane, a Uu-RRC layer is disposed instead of the Uu-SDAP layer of the user plane.

As illustrated in FIGs. 7 and 8, the SRAP layers are disposed on the Uu interface and the PC5 interface. Each SRAP layer is an example of a so-called adaptation layer. The SRAP layer is present only in a layer 2 relay and does not exist in a layer 3 relay. The SRAP layer is present in all of the remote UE 100-1, the relay UE 100-2, and the gNB 200-1. Further, the SRAP layer includes two layers of PC5-SRAP and Uu-SRAP. The PC5-SRAP and the Uu-SRAP each have a bearer mapping function. For example, the bearer mapping function is as follows. In other words, the remote UE 100-1 and the Uu-SRAP of gNB 200-1 perform mapping between the bearer (Uu-PDCP) and the PC5 RLC channel (PC5-RLC). The PC5-SRAP and the Uu-SRAP of the relay UE 100-2 perform mapping between the PC5 RLC channel (PC5-RLC) and the Uu RLC channel (Uu-RLC). Further, the Uu-SRAP has an identification function of the remote UE 100-1.

Note that, although not illustrated in FIGs. 7 and 8, each of the remote UE 100-1 and the relay UE 100-2 may include an RRC layer for PC5. Such an RRC layer is referred to as a "PC5-RRC layer". The PC5-RRC connection and the PC5 unicast link between the remote 100-1 and the UE 100-2 are in a one-to-one correspondence, and the PC5-RRC connection is established after the PC5 unicast link is established.

Although not illustrated in FIGs. 7 and 8, each of the remote UE 100-1 and the relay UE 100-2 may include a PC5-S (signaling) protocol layer. The PC5-S protocol layer is an upper layer of the PDCP layer. Like the PC5-RRC layer, the PC5-S protocol layer is also a layer for transmission of control information.

Communication Control Method according to First Embodiment In the 3GPP, a multi-path (or multi-link) UE to Network (U2N) sidelink relay may be discussed. The multi-path U2N sidelink relay refers to a relay (communication) in which one path is a direct link (in other words, Uu) and another path is an indirect link (in other words, a U2N sidelink relay). The direct link is a link between a network (e.g., gNB) and the remote UE 100-1 without involving the relay UE 100-2. The indirect link is a link between the network and the remote UE 100-1 via the relay UE 100-2.

Meanwhile, the 3GPP defines a split bearer. The split bearer includes a split bearer by Dual Connectivity (DC) and a split bearer by Multicast and Broadcast Service (MBS). When the split bearer by the DC is configured, the PDCP entity is associated with the RLC entity of the Master Cell Group (MCG) and the RLC entity of the Secondary Cell Group (SCG). When the split bearer by the MBS is configured, the PDCP entity is associated with the RLC entity for Point-to-Multipoint (PTM) and the RLC entity for PTP (point-to-point). In either of the split bearers, the PDCP entity is an anchor point associating two divided RLC entities with each other.

Considering the multi-path U2N sidelink relay and the split bearer, a "multi-link split bearer" is also conceivable. A "multi-link split bearer" is, for example, a split bearer including a direct link and an indirect link.

In the 3GPP, priorities are defined between a UL transmission (direct link) and a sidelink relay (indirect link). Therefore, for example, it is not assumed that the remote UE 100-1 performs a UL transmission and a sidelink relay at the same time.

However, the "multi-link split bearer" allows the remote UE 100-1 to transmit the same data using the two links or transmit different data using the two links. The "multi-link split bearer" also allows the remote UE 100-1 to use one link as for a control plane (CP) and use another link as for a user plane (UP). In this way, various operations can be supported by the "multi-link split bearer".

The "multi-link split bearer" is applicable to various forms of sidelink relay.

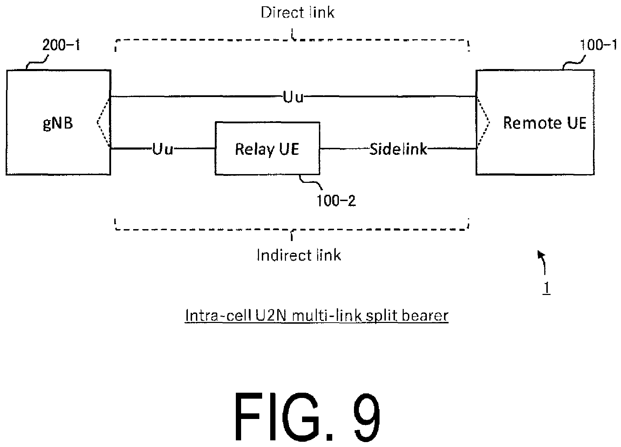

For example, FIG. 9 illustrates a configuration example of the mobile communication system 1 when the "multi-link split bearer" is applied to an intra-cell sidelink relay. Such a "multi-link split bearer" is referred to as an "intra-cell U2N multi-link split bearer".

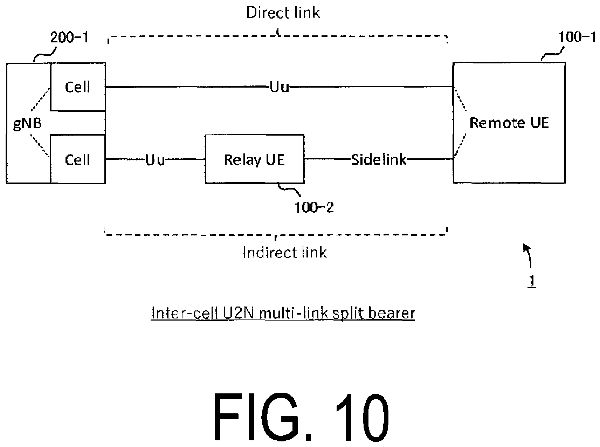

For example, FIG. 10 illustrates a configuration example of the mobile communication system 1 when the "multi-link split bearer" is applied to an inter-cell sidelink relay. Such a "multi-link split bearer" is referred to as an "inter-cell U2N multi-link split bearer".

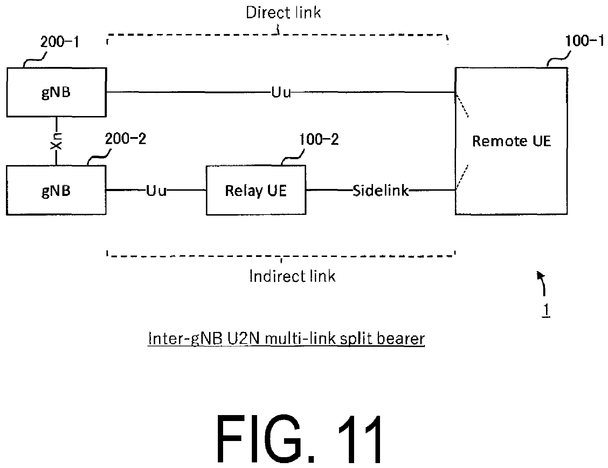

Further, for example, FIG. 11 illustrates a configuration example of the mobile communication system 1 when the "multi-link split bearer" is applied to an inter-gNB sidelink relay. Such a "multi-link split bearer" is referred to as an "inter-gNB U2N multi-link split bearer".

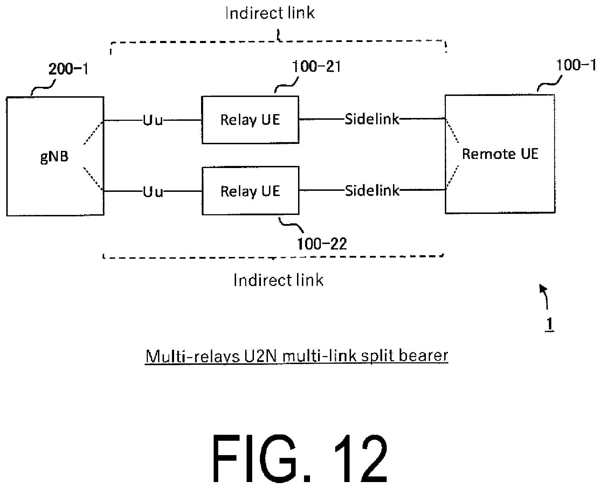

Further, for example, FIG. 12 illustrates a configuration example of the mobile communication system 1 when the "multi-link split bearer" is applied to two indirect links configured between the network and the remote UE 100-1. Such a "multi-link split bearer" is referred to as a "multi-relay U2N multi-link split bearer (multi-relays U2N multi-link split bearer)".

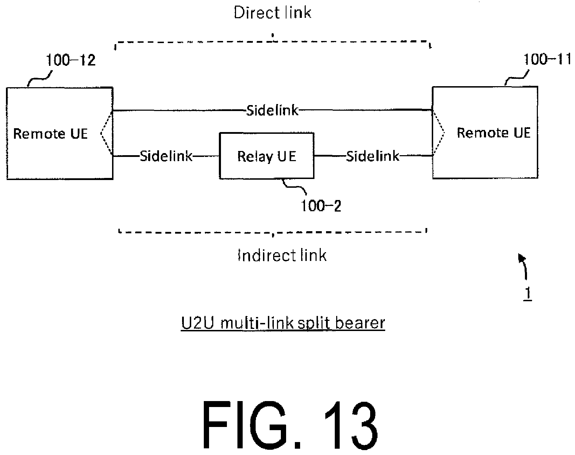

Further, for example, FIG. 13 illustrates a configuration example of the mobile communication system 1 when the "multi-link split bearer" is applied to a UE to UE (U2U) sidelink relay. Such a "multi-link split bearer" is referred to as a "U2U multi-link split bearer".

The first embodiment is an embodiment applicable to each form of the multi-link split bearer configured as described above.

For example, in the "intra-cell U2N multi-link split bearer" illustrated in FIG. 9, the gNB 200-1 does not know whether the PC5 link between the remote UE 100-1 and the relay UE 100-2 is normal or abnormal, which is a problem. This also applies to the embodiment illustrated in FIGs. 10 to 12. For the case of the "U2U multi-link split bearer" illustrated in FIG. 13, the remote UE 100-12 does that is one of the remote UEs not know a state of the PC5 link between the first remote UE 100-11 and the relay UE 100-2, which is a problem.

On the other hand, the other link (the direct link in FIGs. 9 to 11 and 13, and one indirect link in FIG. 12) may be usable.

Therefore, in the first embodiment, an example is described in which the remote UE 100-1 (or the second remote UE 100-12), when detecting an abnormality of the PC5 link, transmits an abnormality notification message to the gNB 200-1 (or the first remote UE 100-11) via the other link.

To be specific, first, a first remote user equipment (e.g., remote UE 100-1 or first remote UE 100-11) detects an abnormality of an indirect link. Second, the first remote user equipment transmits an abnormality notification message including information indicating the abnormality to a predetermined equipment (e.g., gNB 200-1 or second remote UE 100-12) via a predetermined link (e.g., another link different from the indirect link).

This allows the gNB 200-1 (or the second remote UE 100-12) to recognize the abnormality of the PC5 link. Then, the gNB 200-1 can perform various processing such as data transmission suspension for the abnormality.

Note that the first embodiment is applicable to a mobile communication system (e.g., mobile communication system 1) capable of performing a first communication on a predetermined link between a first remote user equipment and a predetermined equipment, and a second communication on an indirect link between the first remote user equipment and the predetermined equipment via a second relay user equipment.

Here, the first remote user equipment is, for example, the remote UE 100-1 or the first remote UE 100-11. The predetermined equipment is, for example, the gNB 200-1 or the second remote UE 100-12. The predetermined link is, for example, an indirect link or a direct link. The second relay user equipment is, for example, the relay UE 100-2 or a second relay UE 100-22.

Other embodiments are also basically applicable to such a mobile communication system 1.

### Operation Example according to First Embodiment

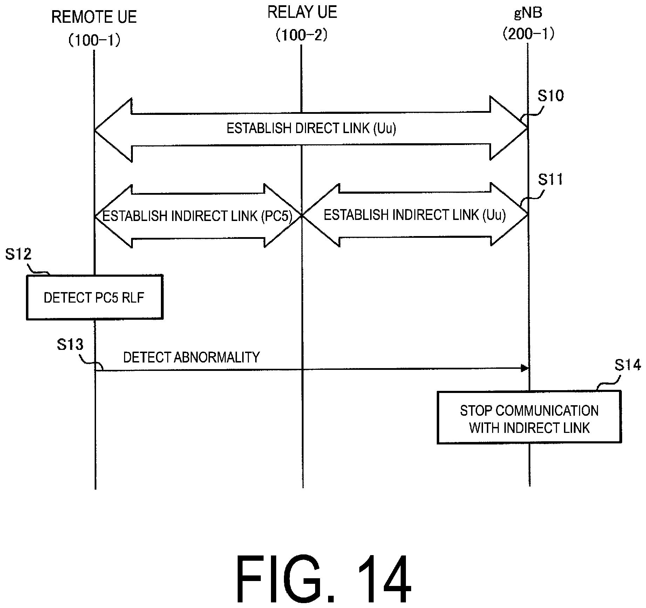

FIG. 14 is a diagram illustrating an operation example according to the first embodiment.

FIG. 14 illustrates an operation example when an "intra-cell U2N multi-link split bearer" (FIG. 9) is configured as a split bearer.

As illustrated in FIG. 14, a direct link (Uu) is established between the remote UE 100-1 and the gNB 200-1 (step S10). An indirect link is also established (PC5, Uu) between the remote UE 100-1 and the gNB 200-1 via the relay UE 100-2 (step S11). The multi-link split bearer (i.e., "intra-cell U2U multi-link split bearer") is configured by means of the direct link and the indirect link.

In step S12, the remote UE 100-1 detects a Radio Link Failure (RLF) (PC5 RLF) in the PC5 link between the relay UE 100-1 and the relay 100-2. For example, when the remote UE 100-1 detects an out-of-sync state with the relay UE 100-2 a first predetermined number of consecutive times and then starts a timer, but thereafter, does not detect an in-sync state for a second predetermined number of consecutive times and the timer expires, the remote UE 100-1 may detect a radio link failure. For example, when the number of times of packet retransmission from the remote UE 100-1 to the relay UE 100-2 reaches the maximum value, the remote UE 100-1 may detect a radio link failure. Alternatively, the remote UE 100-1 may detect an abnormality on the Uu link side (Uu RLF). The remote UE 100-1, when detecting the abnormality of the Uu link, transmits an abnormality notification message to the gNB 200-1 via the relay UE 100-2. The abnormality notification message may include information indicating that the abnormality has occurred in the Uu.

In step S13, the remote UE 100-1 transmits the abnormality notification message to the gNB 200-1 via the direct link. The abnormality notification message may include information indicating the abnormality of the PC5 link. The abnormality notification message may include information indicating that the PC5 RLF has occurred. The abnormality notification message may include identification information (UEID, L2 ID, or L2 Destination ID) of the relay UE 100-2 that is a destination for the abnormality. The abnormality notification message may be transmitted as an RRC message.

Note that when the split bearer illustrated in FIG. 14 is the "U2U multi-link split bearer" (FIG. 13), the first remote UE 100-11 transmits the abnormality notification message to the second remote UE 100-12 using the direct link (PC5). In this case, the abnormality notification message may be transmitted as an PC5-RRC message.

When the split bearer illustrated in FIG. 14 is the "multi-relay U2N multi-link split bearer" (FIG. 12), the remote UE 100-1 transmits the abnormality notification message about an abnormality of the PC5 link with the second relay UE 100-22 (e.g., second relay user equipment) via the first relay UE 100-21 (e.g., first relay user equipment). The abnormality notification message may be transmitted as an PC5-RRC message in the PC5 link or as an RRC message in the Uu link.

In step S14, the gNB 200-1 performs processing such as suspension of communication onto the indirect link in response receiving the abnormality notification message.

Note that when the split bearer illustrated in FIG. 14 is the "U2U multi-link split bearer" (FIG. 13), the second remote UE 100-12 performs processing such as suspension of communication through the indirect link in response receiving the abnormality notification message.

When the split bearer illustrated in FIG. 14 is the "inter-gNB U2N multi-link split bearer" (FIG. 11), a first gNB 200-1 (MN) transmits a message including information indicating the suspension of communication through the indirect link to the second gNB 200-2 (SN) using the Xn interface in response receiving the abnormality notification message. The second gNB 200-2 performs the processing such as suspension of communication through the indirect link or the like in accordance with the message.

The first embodiment is applicable to all forms of the above-described multi-split bearer (FIGs. 9 to 13). In these forms, the destination to which the remote UE 100-1 transmits the abnormality notification message is the gNB 200-1 (FIGs. 9 to 12) or the counterpart to which the first remote UE 100-11 transmits the abnormality notification message is the second remote UE 100-12 (or the second remote user equipment) (FIG. 13). In the former case, in the "multi-relay U2N multi-link split bearer", the abnormality notification message is transmitted via the indirect link (the indirect link via the first relay UE 100-21). In other cases including the latter case, the anomaly notification message is transmitted via the direct link.

### Second Embodiment

A second embodiment is described.

The second embodiment describes an example in which the relay UE 100-2 (or the remote UE 100-1) having performed handover transmits a notification to the remote UE 100-1 (or the relay UE 100-2).

To be more specific, either the second relay user equipment (e.g., relay UE 100-2 or second relay UE 100-22) having performed handover to another base station transmits a first handover notification message including information indicating the handover to the first remote user equipment (e.g., the remote UE 100-1) via the indirect link, or the first remote user equipment having performed handover to the other base station transmits a second handover notification message including information indicating the handover to the second relay user equipment via the indirect link.

Accordingly, for example, even when the relay UE 100-2 has performed handover to another base station that does not support the split bearer, the remote UE 100-1 receives the handover notification message, and thus can perform processing such as release of the configuration of the split bearer for the relay UE 100-2. Therefore, the remote UE 100-1 can appropriately perform communication with the gNB 200-1. Further, even when the remote UE 100-1 has performed handover, the relay UE 100-2 also receives the handover notification message in the same and/or similar way described above, and thus can perform processing such as release of the configuration of the split bearer for the remote UE 100-1 to appropriately perform communication with the gNB 200-1.

### Operation Example according to Second Embodiment

An operation example according to the second embodiment will be described.

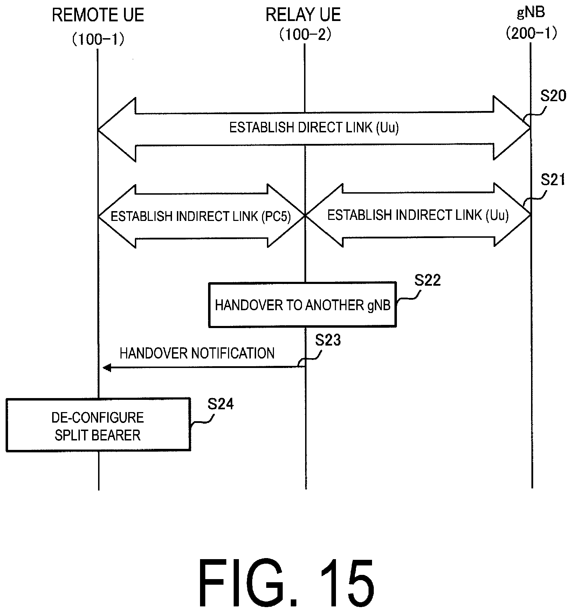

FIG. 15 is a diagram illustrating the operation example according to the second embodiment. FIG. 15 illustrates the operation example when the "intra-cell U2N multi-link split bearer" (FIG. 9) is configured as the split bearer.

As illustrated in FIG. 15, a direct link is established between the remote UE 100-1 and the gNB 200-1 (step S20), and an indirect link is established between the remote UE 100-1 and the gNB 200-1 via the relay UE 100-2 (step S21). The multi-link split bearer (i.e., "intra-cell U2U multi-link split bearer") is configured by means of the direct link and the indirect link.

In step S22, the relay UE 100-2 performs handover to another gNB different from the gNB 200-1. The other gNB may not need to support the split bearer.

In step S23, the relay UE 100-2 transmits a handover notification message (or a first handover message) including information indicating the handover to the remote UE 100-1 via the indirect link. The handover notification message may be transmitted as a PC5-RRC message. The remote UE 100-1 can recognize that the handover has been performed in the relay UE 100-2 by the handover notification message.

In step S24, the remote UE 100-1, in response receiving the handover notification message, releases the configuration of the split bearer for the relay UE 100-2 or suspends the data transmission to the relay UE 100-2.

When not the relay UE 100-2 but the remote UE 100-1 has performed handover, the following takes place.

In other words, the remote UE 100-1 having performed handover to another gNB transmits a handover notification message (or a second handover message) including information indicating the handover to the relay UE 100-2 via the indirect link. The relay UE 100-2, in response receiving the handover notification message, releases the configuration of the split bearer or suspends the data transmission to the remote UE 100-1.

The second embodiment is applicable to forms of the split bearer (FIGs. 9 to 12) other than the "U2U multi-link split bearer" (FIG. 13).

Among these forms, for the "multi-relay U2N multi-link split bearer" (FIG. 12), for example, when the second relay UE 100-22 has performed handover, the second relay UE 100-22 transmits a handover notification message to the remote UE 100-1. The remote UE 100-1 performs processing such as release of the configuration of the split bearer. When the remote UE 100-1 has performed handover, the remote UE 100-1 transmits a handover notification message to the second relay UE 100-22 (or the first relay UE 100-21). The second relay UE 100-22 (or the first relay UE 100-21) performs processing such as release of the configuration of the split bearer.

### Third Embodiment

A third embodiment is described.

The third embodiment describes an example in which the remote UE 100-1 (or the first remote UE 100-11) having performed relay reselection notifies the gNB 200-1 (or the second remote UE 100-12).

To be specific, first, a first remote user equipment (e.g., remote UE 100-1 or first remote UE 100-11) performs relay reselection processing. Second, the first remote user equipment transmits a relay reselection notification message including identification information of a third relay user equipment selected in the relay reselection processing to a predetermined equipment (e.g., gNB 200-1 or second remote UE 100-12) via a predetermined link (e.g., direct link or indirect link).

As a result, for example, the gNB 200-1 (or the second remote UE 100-12) can recognize that the relay reselection has been performed by the remote UE 100-1 (or the first remote UE 100-11), and thus can configure a split bearer for the new relay UE reselected in the relay reselection. This allows the mobile communication system 1 to appropriately perform communication.

### Operation Example according to Third Embodiment

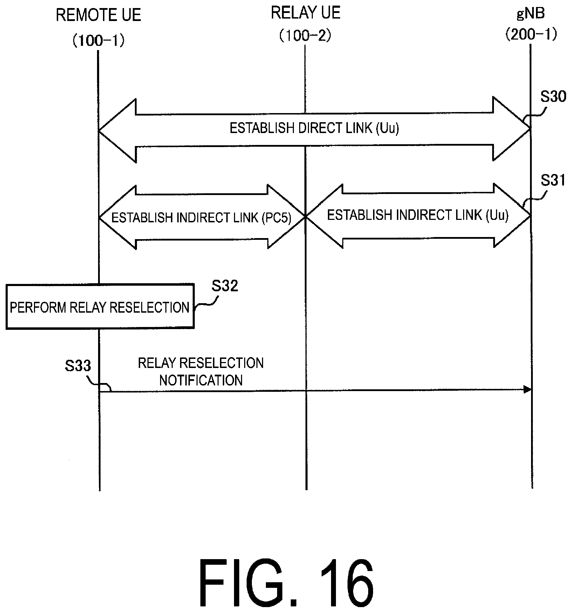

FIG. 16 is a diagram illustrating an operation example according to the third embodiment.

FIG. 16 illustrates an operation example when the "intra-cell U2N multi-link split bearer" (FIG. 9) is configured as the split bearer.

As illustrated in FIG. 16, a direct link is established between the remote UE 100-1 and the gNB 200-1 (step S30), and an indirect link is established between the remote UE 100-1 and the gNB 200-1 via the relay UE 100-2 (step S31). The multi-link split bearer (i.e., "intra-cell U2U multi-link split bearer") is configured by means of the direct link and the indirect link.

In step S32, the remote UE 100-1 performs relay reselection. The relay reselection is performed, for example, in order for the UE 100 in the RRC idle state or the RRC inactive state to migrate from the current relay UE (e.g., relay UE #1) to another relay UE (e.g., relay UE #2) when moving. In the relay reselection, for example, the following processing is performed.

Specifically, the remote UE 100-1 may perform the relay reselection when a frequency used for sidelink communication is outside a coverage range. The remote UE 100-1 may also perform the relay reselection when an RSRP measurement of the cell on which the remote UE 100-1 camps is lower than a predetermined threshold. The remote UE 100-1 selects a relay UE of which a Sidelink Discovery Reference Signal Received Power (SD-RSRP) exceeds a minimum received RSRP level (minimum received quality level) as a candidate relay UE. The remote UE 100-1 may select the candidate relay UE having the highest-quality radio link (i.e., PC5 unicast link) among all the candidate relay UEs meeting a predetermined criterion as the relay UE for reselection (e.g., third relay user equipment). Then, the remote UE 100-1 reselects and camps on the relay UE.

In step S33, the remote UE 100-1 transmits a relay reselection notification message to the gNB 200-1 via the relay the direct link. The message includes the identification information (UEID, L2 ID, or L2 Destination ID) of the relay UE reselected by the remote UE 100-1 in the relay reselection. The message may include information indicating that the relay reselection is successful. The message may be transmitted as an RRC message.

Note that for the "U2U multi-link split bearer" (FIG. 13), the first remote UE 100-11 performs the relay reselection (step S32) and transmits the relay reselection notification message to the second remote UE 100-12 via the direct link (step S33).

The gNB 200-1 receiving the message may update (or change) the split bearer configuration to a split bearer via the reselected relay UE (e.g., "intra-cell U2N multi-link split bearer") if necessary.

Note that the remote UE 100-1 also transmits the relay reselection notification message when the remote UE 100-1 can reselect no relay UE in the relay reselection (step S33). The message may include information indicating that the remote UE 100-1 can reselect no relay UE in the relay reselection. Since the message does not include the identification information of the reselected relay UE, the gNB 200-1 receiving the message may recognize that the remote UE 100-1 cannot reselect the relay UE from the absence of the identification information. The gNB 200-1 upon receiving the message de-configures the split bearer if necessary.

The third embodiment is also applicable to all forms of the above-described multi-split bearer (FIGs. 9 to 13) as in the first embodiment. In these forms, the destination to which the remote UE 100-1 transmits the relay reselection notification message is the gNB 200-1 (FIGs. 9 to 12) or the counterpart to which the first remote UE 100-11 transmits the relay reselection notification message is the second remote UE 100-12 (FIG. 13). In the former case, the relay reselection notification message is transmitted via the indirect link in the "multi-relay U2U multi-link split bearer" (FIG. 12). In other cases including the latter case, the relay reselection notification message is transmitted via the direct link.

### Fourth Embodiment

A fourth embodiment is described.

The fourth embodiment is an embodiment regarding what kind of processing is performed under what kind of condition when a radio link failure (RLF) occurs in one link of the split bearer.

To be more specific, a first remote user equipment (e.g., remote UE 100-1 or first remote UE 100-11) detects a radio link failure in an indirect link. Second, the first remote user equipment does not perform relay reselection when a radio quality of a predetermined link (e.g., direct link or indirect link) is equal to or more than a threshold.

As a result, for example, when the remote UE 100-1 detects a PC5 RLF and thus does not unconditionally perform the relay reselection, and the radio quality of one link is equal to or more than the threshold, the remote UE 100-1 can perform communication using the link. Therefore, the mobile communication system 1 can appropriately perform communication.

In addition, to be more specific, the first remote user equipment de-configures a split bearer configured by means of the predetermined link and the indirect link, when the first remote user equipment starts a timer at a time when detecting the radio link failure and then the timer expires without the radio link failure being recovered in the indirect link.

As a result, for example, even when a PC5 RLF occurs, the remote UE 100-1 waits for recovery from the PC5 RLF until a predetermined time elapses, but when the PC5 RLF is not recovered, the remote UE 100-1 de-configures the split bearer. Therefore, the split bearer can be appropriately configured.

### Operation Example according to Fourth Embodiment

An operation example according to the fourth embodiment is described.

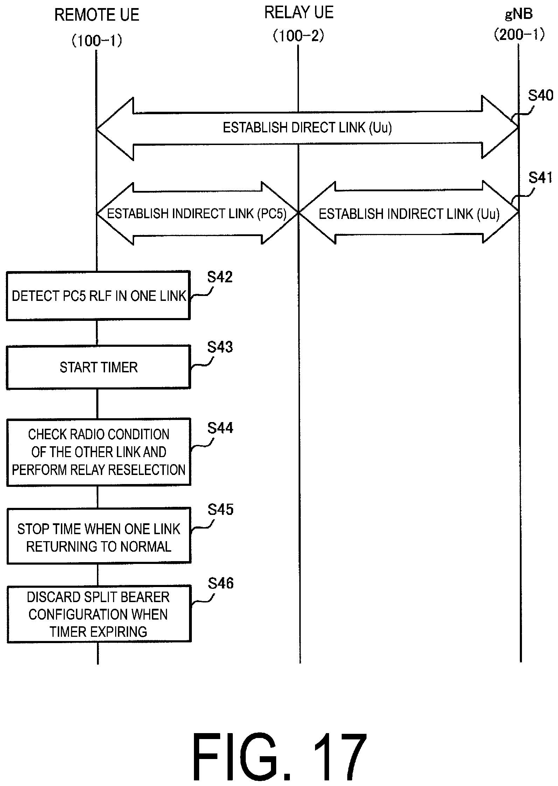

FIG. 17 is a diagram illustrating an operation example according to the fourth embodiment. FIG. 17 also illustrates the operation example when the "intra-cell U2N multi-link split bearer" (FIG. 9) is configured as the split bearer.

As illustrated in FIG. 17, a direct link is established between the remote UE 100-1 and the gNB 200-1 (step S40), and an indirect link is established between the remote UE 100-1 and the gNB 200-1 via the relay UE 100-2 (step S41). The multi-link split bearer (i.e., "intra-cell U2U multi-link split bearer") is configured by means of the direct link and the indirect link.

In step S42, the remote UE 100-1 detects a radio link failure (PC5 RLF) in the indirect link.

In step S43, the remote UE 100-1 starts counting of a timer in response detecting the PC5 RLF.

In step S44, the remote UE 100-1 checks a radio quality of the direct link. The radio quality may be specifically a Sidelink Reference Signal Received Power (SL-RSRP), a Sidelink Discovery Reference Signal Received Power (SD-RSRP), or a Uu RSRP. The remote UE 100-1 does not perform relay reselection when the direct link radio quality is equal to or more than a threshold. This is because, for example, the remote UE 100-1 is capable of communicating via a direct link. On the other hand, when the radio quality of the direct link is less than the threshold, the remote UE 100-1 performs the relay reselection. This is because, for example, the remote UE 100-1 secures communication with the gNB 200-1 via the relay UE reselected by the relay reselection. Note that the threshold may be configure from the gNB 200-1.

Note that when the split bearer is a "multi-relay U2N multi-link split bearer" (FIG. 12), the remote UE 100-1, once detecting a PC5 RLF in the indirect link with respect to the second relay 100-22, checks the radio quality of the indirect link with respect to the first relay UE 100-21. In this case as well, the remote UE 100-1 may not need to perform the relay reselection when the radio quality is equal to or more than the threshold, and may perform the relay reselection when the radio quality is less than the threshold. Alternatively, the remote UE 100-1 may perform the relay reselection when detecting a PC5 RLF in every indirect link. In this case, the remote UE 100-1 may not need to perform the relay reselection when not detecting a PC5 RLF in all the indirect links (e.g., when detecting a PC5 RLF in one indirect link).

In step S45, the remote UE 100-1 stops counting of the timer when the PC5 RLF is recovered (when a normal state is returned).

In step S46, the remote UE 100-1 discards the configuration of the split bearer when the timer expires without the PC5 RLF being recovered. Alternatively, the remote UE 100-1 may de-configure the link in which the radio link failure occurs from the configuration of the split bearer when the timer expires without the PC5 RLF being recovered.

The fourth embodiment is also applicable to all forms of the above-described multi-split bearer (FIGs. 9 to 13) as in the first embodiment. In these forms, the destination for the remote UE 100-1 is the gNB 200-1 (FIGs. 9 to 12) or the destination for the first remote UE 100-11 is the second remote UE 100-12 (FIG. 13). In the former case, furthermore, a split bearer is configured by means of a direct link and an indirect link (FIGs. 9 to 11) or a split bearer is configured by means of two indirect links (FIG. 12). In the latter case, a split bearer is configured by means of a direct link and an indirect link.

### Other Embodiments

A program may be provided that causes a computer to execute each of the processes performed by the UE 100 (including also the relay UE 100-2 and the remote UE 100-1) or the gNB 200. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM.

Circuits for executing processing performed by the UE 100 or the gNB 200 may be integrated, and at least a part of the UE 100 or the gNB 200 may be implemented as a semiconductor integrated circuit (chipset, System on a chip (SoC)).

The phrases "based on" and "depending on" used in the present disclosure do not mean "based only on" and "only depending on," unless specifically stated otherwise. The phrase "based on" means both "based only on" and "based at least in part on". Similarly, the phrase "depending on" means both "only depending on" and "at least partially depending on". The terms "include", "comprise" and variations thereof do not mean "include only items stated" but instead mean "may include only items stated" or "may include not only the items stated but also other items." The term "or" used in the present disclosure is not intended to be "exclusive or". Further, any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

Embodiments have been described above in detail with reference to the drawings, but specific configurations are not limited to those described above, and various design variation can be made without departing from the gist of the present disclosure. The embodiments, operation examples, and processing operations may be adequately combined without being inconsistent.

This application claims priority to US Provisional Patent Application No. 63/301786 (filed on January 21, 2022), the contents of which are incorporated herein by reference in their entirety.

### Supplementary Note

Features relating to the embodiments described above are described below as supplements.
(1) A communication control method in a mobile communication system configured to perform a first communication on a predetermined link between a first remote user equipment and a predetermined equipment, and a second communication on an indirect link between the first remote user equipment and the predetermined equipment via a second relay user equipment, the communication control method including,
   detecting, by the first remote user equipment, an abnormality of the indirect link, and transmitting, by the first remote user equipment, an abnormality notification message including information indicating the abnormality to the predetermined equipment via the predetermined link.
(2) A communication control method in a mobile communication system configured to perform a first communication on a predetermined link between a first remote user equipment and a base station, and a second communication on an indirect link between the first remote user equipment and the base station via a second relay user equipment, the communication control method including,
   performing either
   transmitting, by the second relay user equipment having performed handover to another base station, a first handover notification message to the first remote user equipment via the indirect link, the first handover notification message including information indicating the handover, or
   transmitting, by the first remote user equipment having performed handover to the other base station, a second handover notification message to the second relay user equipment via the indirect link, the second handover notification message including information indicating the handover.
(3) A communication control method in a mobile communication system configured to perform a first communication on a predetermined link between a first remote user equipment and a predetermined equipment and a second communication on an indirect link between the first remote user equipment and the predetermined equipment via a second relay user equipment, the communication control method including,
   performing, by the first remote user equipment, relay reselection processing, and
   transmitting, by the first remote user equipment, a relay reselection notification message to the predetermined equipment via the predetermined link, the relay reselection notification message including identification information of a third relay user equipment selected in the relay reselection processing.
(4) A communication control method in a mobile communication system configured to perform a first communication on a predetermined link between a first remote user equipment and a predetermined equipment and a second communication on an indirect link between the first remote user equipment and the predetermined equipment via a second relay user equipment, the communication control method including,
   detecting, by the first remote user equipment, a radio link failure on the indirect link, and performing, by the first remote user equipment, no relay reselection when a radio quality of the predetermined link is equal to or more than a threshold.
(5) The communication control method according to (4) above, wherein
   the performing no relay reselection includes performing, by the first remote user equipment, the relay reselection when the radio quality of the predetermined link is less than the threshold.
(6) The communication control method according to (4) or (5) above, further including,
   de-configuring, by the first remote user equipment, a split bearer configured using the predetermined link and the indirect link, when the first remote user equipment starts a timer in response to detecting the radio link failure and then the timer expires without recovery from the radio link failure on the indirect link.
(7) The communication control method according to any one of (1) to (4), wherein
   the predetermined equipment is a base station, and
   the predetermined link is either a direct link between the first remote user equipment and the predetermined equipment or an indirect link between the first remote user equipment and the predetermined equipment via a first relay user equipment.
(8) The communication control method according to any one of (1) to (4), wherein
   the predetermined equipment is a second remote user equipment, and
   the predetermined link is a direct link between the first remote user equipment and the predetermined equipment.
(9) The communication control method according to (2) above, wherein
   the predetermined link is either a direct link between the first remote user equipment and the base station or an indirect link between the first remote user equipment and the base station via a first relay user equipment.

## Claims

1. A communication control method in a mobile communication system configured to perform a first communication on a predetermined link between a first remote user equipment and a predetermined equipment, and a second communication on an indirect link between the first remote user equipment and the predetermined equipment via a second relay user equipment, the communication control method comprising:
detecting, by the first remote user equipment, an abnormality of the indirect link; and
transmitting, by the first remote user equipment, an abnormality notification message including information indicating the abnormality to the predetermined equipment via the predetermined link.

2. A communication control method in a mobile communication system configured to perform a first communication on a predetermined link between a first remote user equipment and a base station, and a second communication on an indirect link between the first remote user equipment and the base station via a second relay user equipment, the communication control method comprising:
performing either
transmitting, by the second relay user equipment having performed handover to another base station, a first handover notification message to the first remote user equipment via the indirect link, the first handover notification message including information indicating the handover, or
transmitting, by the first remote user equipment having performed handover to the other base station, a second handover notification message to the second relay user equipment via the indirect link, the second handover notification message including information indicating the handover.

3. A communication control method in a mobile communication system configured to perform a first communication on a predetermined link between a first remote user equipment and a predetermined equipment and a second communication on an indirect link between the first remote user equipment and the predetermined equipment via a second relay user equipment, the communication control method comprising:
performing, by the first remote user equipment, relay reselection processing; and
transmitting, by the first remote user equipment, a relay reselection notification message to the predetermined equipment via the predetermined link, the relay reselection notification message including identification information of a third relay user equipment selected in the relay reselection processing.

4. A communication control method in a mobile communication system configured to perform a first communication on a predetermined link between a first remote user equipment and a predetermined equipment and a second communication on an indirect link between the first remote user equipment and the predetermined equipment via a second relay user equipment, the communication control method comprising:
detecting, by the first remote user equipment, a radio link failure on the indirect link; and
performing, by the first remote user equipment, no relay reselection when a radio quality of the predetermined link is equal to or more than a threshold.

5. The communication control method according to claim 4, wherein
the performing no relay reselection comprises performing, by the first remote user equipment, the relay reselection when the radio quality of the predetermined link is less than the threshold.

6. The communication control method according to claim 4, further comprising:
de-configuring, by the first remote user equipment, a split bearer configured using the predetermined link and the indirect link, when the first remote user equipment starts a timer in response to detecting the radio link failure and then the timer expires without recovery from the radio link failure on the indirect link.

7. The communication control method according to any one of claims 1, 3, and 4, wherein
the predetermined equipment is a base station, and
the predetermined link is either a direct link between the first remote user equipment and the predetermined equipment or an indirect link between the first remote user equipment and the predetermined equipment via a first relay user equipment.

8. The communication control method according to any one of claims 1, 3, and 4, wherein
the predetermined equipment is a second remote user equipment, and
the predetermined link is a direct link between the first remote user equipment and the predetermined equipment.

9. The communication control method according to claim 2, wherein
the predetermined link is either a direct link between the first remote user equipment and the base station or an indirect link between the first remote user equipment and the base station via a first relay user equipment.
